# EUROPEAN PATENT SPECIFICATION

(11) **EP 3 900 591 B1**
(45) Date of publication and mention of the grant of the patent: **06.08.2025**
(21) Application number: 19900841.8
(22) Date of filing: 10.12.2019
(51) Int. Cl.: A47L 9/00, A47L 11/40, A47L 9/28, A47L 11/284

(54) **ROBOT CLEANER, CLEANING METHOD AND AUTOMATICALLY CHARGING SYSTEM**
REINIGUNGSROBOTER, REINIGUNGSVERFAHREN UND AUTOMATISCHES LADESYSTEM
ROBOT NETTOYEUR, DISPOSITIF ET SYSTÈME DE CHARGE AUTOMATIQUE

(30) Priority: 21.12.2018 CN 201811572154; 29.03.2019 CN 201910250295
(43) Date of publication of application: 27.10.2021
(73) Proprietor: Positec Power Tools (Suzhou) Co., Ltd, Suzhou, Jiangsu 215123 (CN)
(72) Inventor: ZHANG, Shisong, Suzhou, Jiangsu 215123 (CN); WU, Hongbing, Suzhou, Jiangsu 215123 (CN); XIE, Mingjian, Suzhou, Jiangsu 215123 (CN); XU, Jianqiang, Suzhou, Jiangsu 215123 (CN); ZHONG, Hongfeng, Suzhou, Jiangsu 215123 (CN); LI, Ji, Suzhou, Jiangsu 215123 (CN)
(74) Representative: Kilburn & Strode LLP
(86) International application number: PCT/CN2019/124279
(87) International publication number: WO 2020/125492

(56) References cited:
- WO-A1-2018/202301
- WO-A1-2018/217226
- CN-A- 103 327 865
- CN-A- 103 327 865
- CN-A- 108 968 812
- CN-A- 108 968 812
- CN-U- 205 585 960
- CN-U- 205 846 767
- CN-U- 206 880 637
- DE-A1- 102016 124 684
- US-A1- 2018 361 585

## Description

### BACKGROUND

### Technical Field

The present invention relates to a cleaning robot and further relates to a cleaning robot, a cleaning method, and an automatic charging system.

### Related Art

As user requirements are more diversified, there are various types of cleaning robots. The cleaning robot can wipe a ground, thereby improving the cleanliness of the ground.

An existing cleaning robot generally performs mopping work by using a mop, and when rooms of a user are cleaned, a plurality of regions of the rooms such as a kitchen, a living room, a bathroom, and a bedroom are generally cleaned by using the same mop. In this case, stains of different regions are contaminated mutually, and the cleaning effect is poor.

Therefore, the user needs to personally take care of the robot, and after the robot mops for a specific period of time, the mop is unloaded and cleaned or replaced with a new mop. Such manual work degrades user experience in terms of automated operation of the robot.

US2018361585A1 discloses a robotic platform having a damp/wet mopping system in which after a predetermined amount of time or distance is traveled across the floor, a section of absorbent material in contact with the floor may be pulled through and stored on a roll providing a clean length of absorbent material for use. Further, the platform may provide for location and sensor-based detection of a transition between separately defined service areas, such as automatically detecting a surface change (e.g., rug to tile) at a location and determining that a tool change is required to transition from one service area to another.

### SUMMARY

To overcome defects of the prior art, the problem that the present invention needs to resolve is to provide a cleaning robot that can perform cleaning work through region classification.

A technical solution adopted in the present invention to resolve the existing technical problems is provided by a cleaning robot as defined in claims 1 to 13.

An embodiment of the present invention further provides a cleaning method for a cleaning robot as defined in claim 14.

Compared with the prior art, the beneficial effect of the present invention is that the defect of mutual contamination of stains in different regions caused by the use of the same wiping member in the regions may be avoided, thereby ensuring that stains in different types of regions are not contaminated mutually, and improving the degree of cleanliness of the cleaning robot.

### BRIEF DESCRIPTION OF THE DRAWINGS

The foregoing objectives, technical solutions, and beneficial effects of the present invention can be achieved by using the following accompanying drawings:
FIG. 1 is a schematic diagram of a cleaning robot system according to an embodiment of the present invention.
FIG. 2 is a front view of a cleaning robot equipped with an energy module according to an embodiment of the present invention.
FIG. 3 is a schematic diagram of function modules of a cleaning robot according to an embodiment of the present invention.
FIG. 4 is a side view of a mopping module according to an embodiment of the present invention.
FIG. 5 is a schematic diagram of an application scenario according to an embodiment of the present invention.
FIG. 6 is a front view of a cleaning robot not equipped with any energy module according to an embodiment of the present invention.
FIG. 7 is a three-dimensional diagram of a hand-held cleaner and an energy module according to an embodiment of the present invention.

### DETAILED DESCRIPTION

Detailed descriptions and technical content of the present invention are described below in cooperation with the accompanying drawings. However, the accompanying drawings only provide reference and description rather than limit the present invention.

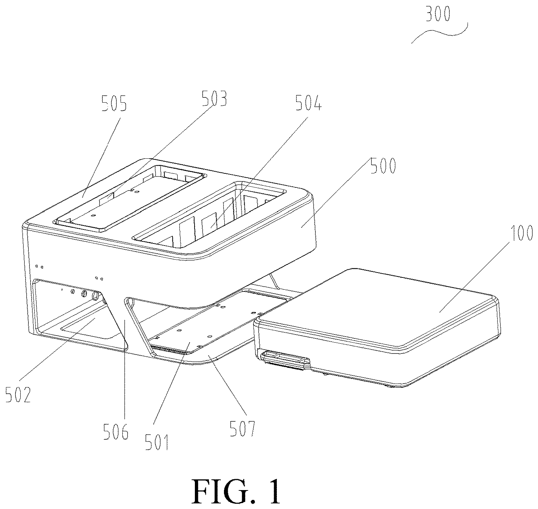

FIG. 1 is a schematic diagram of a cleaning robot system according to the present invention. The cleaning robot system 300 may include a base station 500 and a cleaning robot 100, and the cleaning robot 100 may be a device that can autonomously replace a wiping member. Correspondingly, in addition to charging the cleaning robot 100, the base station 500 for the cleaning robot 100 to return for charging may be further configured for the cleaning robot 100 to replace the wiping member, and a charging function and a wiping member replacement function are combined to form the base station of the cleaning robot, thereby saving a user space. When the cleaning robot 100 needs to return to the base station 500, for example, when it is detected that the wiping member needs to be replaced or the cleaning robot 100 needs to be charged, a program of returning to the base station 500 is started, and the cleaning robot 100 returns to the base station 500 to automatically replace the wiping member and/or automatically charge the cleaning robot 100. In an embodiment, the wiping member may include a mop, a sponge eraser, or the like. In the following, an example in which the mop is used as a wiping member is used for description.

The base station 500 includes a bottom plate 507, a supporting plate 506, and an upper plate 505, where the upper plate 505 is connected to the bottom plate 507 by the supporting plate 506. A new mop groove 503, an old mop groove 504, and a mop replacement device (not shown in the figure) are disposed on the upper plate 505, the mop replacement device may adopt an elevating mechanism, a swing mechanism, or the like, and projections of the new mop groove 503 and the old mop groove 504 on the bottom plate 507 correspond to a second operation position 502 and a first operation position 501 of the cleaning robot 100 on the bottom plate 507. It may be understood that positions of the new mop groove and the old mop groove are not fixed. For example, in another embodiment, the positions of the new mop groove 503 and the old mop groove 504 may be alternatively interchangeable. The cleaning robot 100 unloads an old mop in the first operation position 501, the mop replacement device of the base station 500 recycles the old mop, and the mop replacement device of the base station 500 releases a new mop, so that the cleaning robot 100 loads the new mop in the second operation position 502.

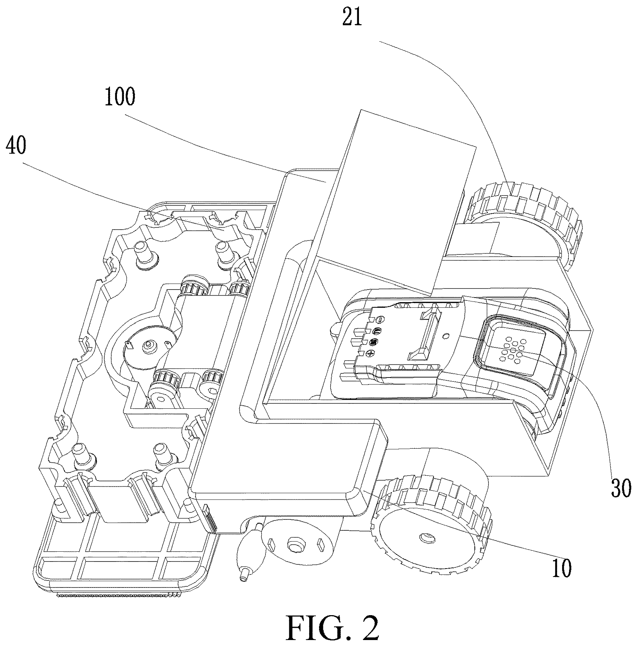

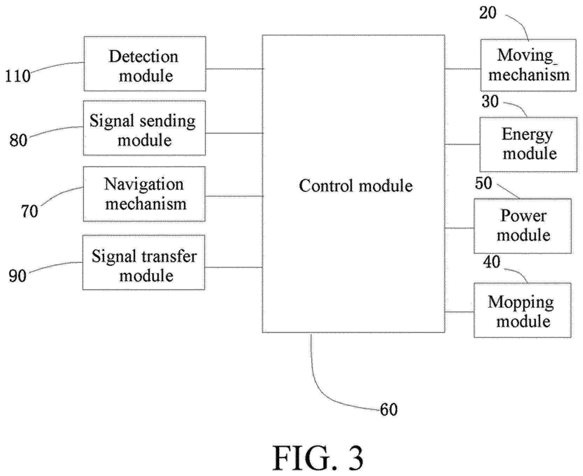

As shown in FIG. 2 and FIG. 3, in this embodiment, the cleaning robot 100 includes a body 10, a moving mechanism 20, an energy module 30, a mopping module 40, a power module 50, a control module 60, and a navigation mechanism 70. A moving element of the moving mechanism may include a driving wheel 21 for driving the robot 100 to move. It may be understood that the moving element may be alternatively a track structure. In an embodiment, the cleaning robot further includes a driven wheel (not shown in the figure). The energy module 30 is optionally configured to supply power to the cleaning robot and the cleaning robot optionally charges the energy module 30. The power module 50 may include a motor and a transmission mechanism connected to the motor, the transmission mechanism is connected to the moving mechanism, the motor drives the transmission mechanism to work, and a transmission effect of the transmission mechanism enables the moving mechanism to move. The transmission mechanism may be a worm gear and worm mechanism, a bevel gear mechanism, or the like. The power module 50 may be provided with two sets of motors, one set of motors drives the moving mechanism to move, and the other set of motors drives the mopping module to vibrate at a specific frequency to mop. Alternatively, the power module 50 may be provided with only one set of motor for driving the moving mechanism to move. It may be understood that a quantity of each set of motors is not limited, and may be, for example, one or two. The mopping module 40 may be configured to be mounted on the body and perform predetermined mopping work on a working surface (for example, a ground) and a mop can be mounted on the mopping module 40. In this embodiment, the cleaning robot may be a domestic and/or indoor service robot.

The navigation mechanism may include, but is not limited to, at least one of the following: a visual sensor, an ultrasonic sensor, a radar sensor, an optical sensor (a laser LDS, an infrared sensor, or the like), a UWB sensor, an inertial navigation system, a satellite positioning system (a GPS, a BeiDou, or the like), and the like, and is configured to provide environment control data, control the cleaning robot to work, and form a working region map of the cleaning robot. A working region of the cleaning robot may be a single-storied house or a villa-style multi-storied house. Correspondingly, the formed working region map may be a map for a single-storied house or a plurality of maps for a multi-storied house, and each map corresponds to one storey. When the working region is a single-storied house, the cleaning robot works directly based on one map. When the working region is a multi-storied house, a user may select a corresponding map for a storey in which the cleaning robot is located, so that the cleaning robot works based on the corresponding map; or the cleaning robot may recognize a storey in which the cleaning robot is located by using a visual sensor or in another manner, to autonomously select a map corresponding to the storey to work. The navigation mechanism 70 may be configured to mark a current position of the cleaning robot in the working region map. A position of the cleaning robot is marked in real time by using the navigation mechanism 70, so that the cleaning robot can quickly return to the marked position to continue to work. For example, when the cleaning robot returns for charging, a leaving position is marked before the cleaning robot is charged, so that the cleaning robot can quickly reach the leaving position to continue to charge when being fully charged and returning.

In another embodiment of this application, the cleaning robot 100 may be alternatively a sweeping and mopping integrated cleaning device. In this case, the cleaning robot may further include a sweeping module in addition to the mopping module, the sweeping module may include a roller brush and a side brush, which are configured to clean sundries such as dust on a ground, a corner, and the like, the sundries are relatively concentrated at the roller brush by using the side brush for processing, and the dust is collected into a dust-collecting box.

The control module is, for example, a controller, and may be an embedded digital signal processor (DSP), a microprocessor unit (MPU), an application-specific integrated circuit (ASIC), a programmable logic device (PLD), a system on chip (SOC), a central processing unit (CPU), a field programmable gate array (FPGA), or the like.

The controller may control, according to a preset program or a received instruction, the cleaning robot to work. Specifically, the controller may control the moving mechanism to move according to a preset moving path in the working region of the cleaning robot. While the moving mechanism drives the cleaning robot to move, the mopping module performs mopping work (dry mopping or wet mopping), so as to remove garbage such as dust in the working region. When the cleaning robot moves in the preset path and completes the mopping work, the controller may control the cleaning robot to stop the mopping work and control the moving mechanism to move, so that the moving mechanism drives the cleaning robot to leave the working region. A moving path and a stop position of the cleaning robot may be preset in the controller and the controller controls execution of the moving mechanism.

In this application, the cleaning robot may be a device that can autonomously replace a mop. Correspondingly, in addition to charging the cleaning robot, the base station for the cleaning robot to return for charging may be further used as a base for the cleaning robot to replace the mop, and a charging function and a mop replacement function are combined to form the base station of the cleaning robot, thereby saving a user space. Certainly, a mop replacement position in the cleaning robot and a position to be returned to for charging may be alternatively set separately. In this case, when the cleaning robot needs to replace a mop, the cleaning robot may return to the mop replacement position to replace the mop; and when the cleaning robot needs to be charged, the cleaning robot may return to the charging position for charging. This is not limited in this application. In this case, the position to be returned to for mop replacement may be an unfixed position point. In the following description of this application, for ease of description, unless otherwise specified, when that the cleaning robot returns to replace the mop is described, the position to be returned to may refer to a base station that combines two functions of charging and mop replacement, or may refer to a base station that is only configured to replace a mop. Correspondingly, when that the cleaning robot returns for charging is described, the position to be returned to may refer to a base station that combines two functions of charging and mop replacement, or may refer to a base station that is only configured to charge the cleaning robot.

The cleaning robot may include a signal sending module 80. When the charging function and the mop replacement function are combined to form the base station of the cleaning robot, the signal sending module may send a signal of replacing the mop to the base station when the cleaning robot returns to the base station to replace the mop, or may send a signal of returning for charging to the base station when the cleaning robot returns to the base station for charging. Correspondingly, the base station further has a signal receiving module for receiving the signal of the cleaning robot. In this way, when the cleaning robot returns, the base station can learn the purpose of the return of the cleaning robot in advance, and perform corresponding preparation work in advance, to avoid the defect that if the cleaning robot cannot send a related signal to the base station, when the cleaning robot returns for charging, the base station incorrectly considers that the cleaning robot needs to replace a mop when detecting that the cleaning robot reaches a corresponding position in the base station, to cause a new mop to fall. When the charging function and the mop replacement function are set separately, the signal sending module may send, when the cleaning robot returns to a mop replacement point to replace a mop, a signal of replacing the mop to the mop replacement point. Correspondingly, the mop replacement point also has a signal receiving module for receiving the signal of the cleaning robot.

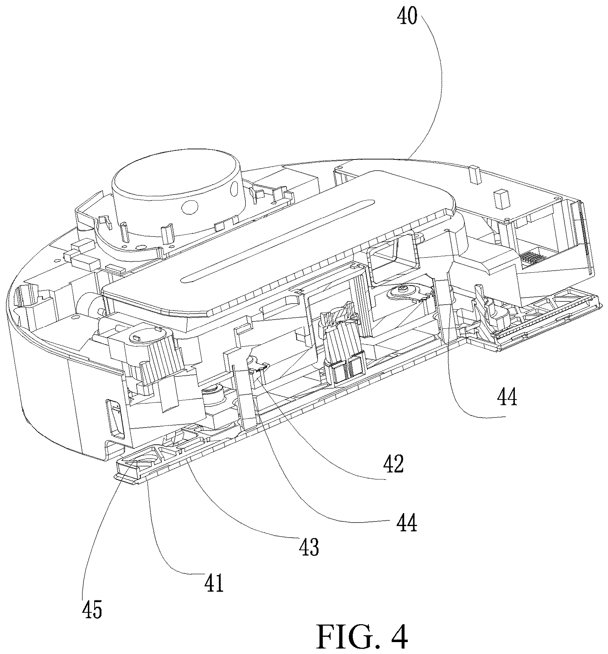

As shown in FIG. 4, in an embodiment, the mopping module 40 may further include a mopping plate 43. A mop 41 is detachably mounted on the mopping plate 43, and the mopping plate 43 and the mop 41 may be formed integrally, or may be connected in a manner such as a hook-and-loop fastener or a double-sided tape. This is not limited in this application.

As shown in FIG. 4, in an embodiment, the cleaning robot may further include a lifting mechanism 42 connected to the mop 41. The lifting mechanism may adjust a height position of the mopping module relative to the working surface under the control of the control module. The lifting mechanism 42 may be configured to control lifting or lowering of the mopping module in the entire cleaning process. Correspondingly, the lifting mechanism 42 may be alternatively configured to control lifting or lowering of the mopping plate 43 carrying the mop.

In an embodiment, the mopping module is detachably mounted on the body. In an embodiment, as shown in FIG. 4, a protrusion unit (shown as a top column 44 in this application) is disposed on the body of the cleaning robot. When the mopping module is lifted to a position in which the mopping module is unloaded, the protrusion unit (the top column 44) is in contact with the mopping module, to provide a downward action force to the mopping module, so that the mopping module is separated from the body. The body may be connected to the mopping module 40 in a manner such as a magnet, mechanical snap-fit, or formation of a negative pressure. When the control module controls the lifting mechanism 42 to be lifted to a predetermined height, the top column 44 is in contact with the mopping module 40, so that the mopping module 40 is separated from the body.

The mopping module of the cleaning robot has at least three height positions relative to the working surface during work, which are a first position when the cleaning robot performs mopping work, a second position when the cleaning robot moves or crosses an obstacle, and a third position when the cleaning robot unloads a mop. The third position is higher than or equal to the second position and the first position is lower than the second position. The requirements of the cleaning robot for mopping the ground, crossing obstacles, and automatically replacing the mop can be achieved by adjusting the position of the mopping module by using the lifting mechanism. Certainly, in addition to the three height states, the cleaning robot may further have a fourth position that is lower than the first position and used for mounting a new mop.

The following describes the foregoing position relationship by using an application scenario as an example. When the cleaning robot is in a mopping working state, the lifting mechanism controls a mop to be in the first position. In this case, there is a specific pressure between the mop and the ground, and the mop may be in contact with the ground and has a specific amount of interference, to achieve a relatively good cleaning effect. When the cleaning robot encounters an obstacle during mopping, the lifting mechanism controls the mop to be in the second position. In this case, the mop is automatically lifted, a height of the second position is greater than a height of the working state, but the height cannot be greater than a height of unloading the mop, to prevent the mop and the mopping plate from falling. When the cleaning robot needs to replace the mop during the mopping or the cleaning robot needs to return for charging when an amount of power is less than a preset threshold during the mopping, the lifting mechanism controls the mop to be lifted to the second position, and meanwhile, the cleaning robot may further form position coordinates of the cleaning robot before returning by using the navigation mechanism and mark the position coordinates in the working region map. When the mop is replaced, the lifting mechanism controls the mop to be lifted to the third position to unload the mop, the mopping plate provided with the mop falls off from the cleaning robot by using the top column fixedly mounted on the cleaning robot by overcoming a magnetic force, an old mop is unloaded to a first operation position, and the first operation position may be used for unloading the old mop. After the old mop is unloaded, the cleaning robot automatically mounts a new mop, and the cleaning robot may mount the new mop in a second operation position. After the robot enters a corresponding position, the mopping plate drops to a height of mounting the new mop, and the new mop is mounted on a cleaning component by using magnetic absorption, to complete mounting of the new mop. After the new mop is mounted or an amount of power is full, the lifting mechanism controls the mop to be lifted to the second position and set off to return to the position of the cleaning robot marked in the working region map, and when the marked position is reached, the lifting mechanism controls the mop to be adjusted to the first position to continue to mop. When the cleaning robot needs to pause mopping during the mopping, the lifting mechanism controls the mop to be lifted to the second position. The lifting mechanism controls the mop to be lifted when the cleaning robot crosses the obstacle, to resolve the defect of a limited cleanable range caused by that the mopping module of the cleaning robot in the prior art only has the second position state when mopping the ground during the work and therefore a height of crossing the obstacle is almost 0. The mopping module may control the lifting mechanism to lift the mop to the second position when mopping is paused, to resolve the defect in the prior art that the mopping module only has the second position state when mopping the ground, resulting in that the floor is soaked in the liquid and the floor is damaged. After replacing the mop or being charged, the cleaning robot may further return to a mopping position before the mop is replaced to continue to mop at an interrupted point, to resolve the defect that in the prior art, a mopped region is repeatedly mopped, and a region that is not mopped is missed, and improve the cleaning efficiency of the cleaning robot. In addition, the mop can be replaced automatically, which improves the degree of automation and user experience of the cleaning robot.

The cleaning robot may replace a mop based on the following conditions, which may specifically include: a use time of the mop, a mopping area of the mop, a stain condition on the mop or a damage condition of the mop, and change of the working region, thereby improving the utilization of the mop without causing secondary contamination of the mop.

In an embodiment of this application, the cleaning robot may include a timing module. A working time of the mop is recorded by using the timing module and the working time is compared with a preset time threshold. If the working time is greater than or equal to the time threshold, the cleaning robot returns to replace the mop, generates coordinates of a mopping position before the return, and marks the coordinates in the working region map. After mounting a new mop, the cleaning robot returns to the position marked in the working region map to continue to work.

In another embodiment of this application, the cleaning robot may include a working area recording module. A working area of the mop is recorded by using the working area recording module and the working area is compared with a preset area threshold. If the working area is greater than or equal to the area threshold, the cleaning robot returns to replace the mop, generates coordinates of a mopping position before the return, and marks the coordinates in the working region map. After mounting a new mop, the cleaning robot returns to the position marked in the working region map to continue to work.

In another embodiment of this application, the cleaning robot may include a mop sensor. A degree of cleanliness of the mop is detected by using the mop sensor. When it is detected that the degree of cleanliness is less than a preset threshold, the control module controls the cleaning robot to return to replace the mop, generate coordinates of a mopping position before the return, and mark the coordinates in the working region map. After mounting a new mop, the cleaning robot returns to the position marked in the working region map to continue to work. When it is detected that the degree of cleanliness is greater than or equal to the preset threshold, the control module controls the cleaning robot to continue mopping work. The mop sensor may be mounted below the body of the cleaning robot and may specifically include, but is not limited to at least one of the following: a capacitive sensor, a current sensor, a radar sensor, and an optical sensor.

In this embodiment of this application, the cleaning robot may include a detection module 110 configured to detect a type of the working region. When the mopping module completes mopping work of a current region, the detection module may detect a region type of a next region to determine whether the type of the next region is the same as that of the current region. When it is determined that the region types are different, the control module may control the cleaning robot to transfer information indicating that a mop is to be replaced to a user, or replace a mop. It should be noted that in this embodiment, the completing, by the mopping module, the mopping work of the current region is not limited to completing the mopping work of 100% area of the current region, which may include a condition in which the mopping module basically completes the mopping work of the current region. In an application scenario, when the cleaning robot mops 95% area of the current region, the region type of the next region may be detected by using the detection module. When the types are different, the controller controls the robot to send a notification message indicating that a mop is to be replaced to a client or controls the robot to automatically replace a mop.

The working region of the cleaning robot includes at least one region type, and region classification is performed in a user-defined or preset manner. In an embodiment, after the cleaning robot builds the working region map, the user may directly classify each region displayed in the map of the client and store a classification result. The user may perform region classification on the formed working region map according to actual needs. For example, the regions may be classified into a kitchen, a bathroom, a bedroom, and another region according to actual functions of the regions. In a process of entering the mopping work after the classification, different mops or different cleaning manners such as dry mopping, wet mopping, and whether to use a cleaning solution to mop may be used for different regions.

In another embodiment, alternatively, the cleaning robot may directly and automatically classify each region on the map during the building of the map in a default classification manner preset by a manufacturer, mark a region classification result on the map, and store the result. For example, the cleaning robot may detect each region by using a visual sensor, a radar sensor, or an optical sensor (including an LDS, a TOF sensor, or the like). When a bedding item is detected, the region is classified as a bedroom by comparison with a large amount of data in a robot feature library; and when an item such as a range hood is detected, the region is classified as a kitchen. In a process of entering the mopping work after the classification, the robot may use different mops or different cleaning manners (whether to use a cleaning solution) for different regions according to the region classification result marked in the map. In the mopping process of the robot, different mops are used for different types of regions, so that the defect of mutual contamination of stains in different regions caused by the use of the same mop in the regions may be avoided, thereby ensuring that stains in different types of regions are not contaminated mutually, and improving the degree of cleanliness of the cleaning robot.

In an embodiment of this application, in a case that a region type is marked in the map, the detection module may be implemented by a program algorithm, and the region type is detected by the program algorithm. Specifically, before the cleaning robot finishes cleaning the current region and enters the next region, region types of a current working region and a next working region in the working region map are compared. When it is detected that the current working region and the next working region are of different types, the robot is controlled to transfer information indicating that a mop is to be replaced to a user, or replace a mop; and when it is detected that the current working region and the next working region are of the same type, the mop may be further detected by using the mop sensor for detecting the degree of cleanliness of the mop described in the above embodiment. Details are not described herein again.

In an embodiment of this application, the detection module may be a visual sensor or an optical sensor. In a case that a region type is marked or is not marked in the map, the region type may be determined according to a region image detected by the visual sensor or the optical sensor. Specifically, before the cleaning robot finishes cleaning the current region and enters the next region, whether a type of a next to-be-cleaned region is the same as that of the current region is observed by using the visual sensor, and when it is detected that the two regions are of different types, the robot is controlled to transfer the information indicating that the mop is to be replaced to the user, or replace the mop.

In another embodiment of this application, the detection module may be a radar sensor. In a case that a region type is marked or is not marked in the map, the region type may be determined according to an electromagnetic wave change detected by the radar sensor. Specifically, before the cleaning robot finishes cleaning the current region and enters the next region, whether a type of a next to-be-cleaned region is the same as that of the current region is observed by using the radar sensor, and when it is detected that the two regions are of different types, the robot is controlled to transfer the information indicating that the mop is to be replaced to the user, or replace the mop.

In an embodiment, the cleaning robot may include a signal transfer module 90. The information indicating that the mop is to be replaced is transferred to the user by using the signal transfer module, and the information may be remotely transferred information or local information from the cleaning robot. Specifically, the remote information may be a notification message indicating that the mop is to be replaced and that is sent to the client, and the user may personally replace the mop after receiving the notification message, or may instruct the cleaning robot to autonomously replace the mop. The local information may be information about a man-machine interaction interface of the cleaning robot or may be information transferred by the cleaning robot by using light or sound of an indication unit, and the user may personally replace the mop when seeing the light emitted by the cleaning robot or hearing the sound, or may remotely or directly press a relevant key such as a physical key on the cleaning robot or a virtual key on the man-machine interaction interface, to instruct the cleaning robot to autonomously replace the mop. In another embodiment, the control module controls the cleaning robot to replace the mop, that is, when it is determined that the region types are different, the control module controls the cleaning robot to replace the mop, and a position of replacing the mop may be the base station combining the charging function and the mop replacement function, or may be a temporarily set base station capable of replacing the mop.

Further, when the region types detected by the detection module are the same, a degree of cleanliness of the mop may be detected by using the mop sensor. When the detected degree of cleanliness is less than a preset threshold, the control module controls the cleaning robot to mark a current position, replace the mop, and return to the marked position to perform mopping continuously at an interrupted point after the mop is replaced. When the detected degree of cleanliness of the mop is greater than or equal to the preset threshold, the control module controls the cleaning robot to perform mopping work in a next region.

In an embodiment of this application, when it is determined that the region types are different, the cleaning robot may be controlled to return to the base station to automatically replace the mop when the cleaning robot keeps the mopping module in a lifted state.

In an embodiment of this application, when the cleaning robot returns for replacing the mop or returns to the base station for charging, the cleaning robot may mark a position before the return in the map; and when the cleaning robot has replaced the mop or is fully charged and returns, the cleaning robot may directly return to the marked position to continue the mopping work according to a pre-planned path, thereby improving the cleaning efficiency of the cleaning robot.

The following describes a method in the embodiments of this application by using a specific application scenario.

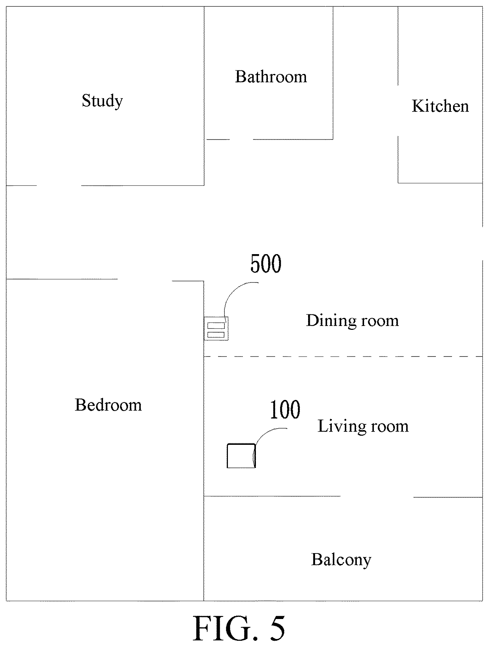

FIG. 5 is a schematic diagram of a scenario according to this application. In this application scenario, the base station 500 may perform charging and replace a mop. A user Xiao Wang cleans rooms at home by using the cleaning robot 100. After the cleaning robot 100 forms a map of the home of Xiao Wang, Xiao Wang classifies rooms into such seven parts as a bedroom, a study, a balcony, a living room, a dining room, a bathroom, and a kitchen according to the use of the rooms. The bedroom and the study belong to the same region type, and the cleaning robot 100 performs wet mopping from the base station 500, first reaches the bedroom according to a preset moving path, and starts mopping work according to a zigzag-shaped path after reaching the bedroom. After completing the mopping work of the bedroom, the cleaning robot 100 detects a type of a next mopping region, namely, the study, to find that the type of the study is the same as the type of the previously cleaned bedroom, and then detects a degree of cleanliness of the mop by using a mop sensor. If it is found that the degree of cleanliness is greater than a preset threshold, the cleaning robot moves to the study to continue the mopping work. When finding that the degree of cleanliness is less than the preset threshold in the process of cleaning the study, the cleaning robot marks a current mopping position, returns to the base station 500 to replace the mop in a state of keeping the mopping module at the second position, sends a signal of returning for replacing the mop to the base station 500 when returning, returns to the marked position in the study to continue to mop at an interrupted point after replacing the mop, and prepares to enter the living room according to the preset moving path after completing mopping the study; and first detects whether a region type of the living room is the same as the region type of the study, returns to the base station 500 to replace the mop when finding that the region type of the living room is different from the region type of the study, and enters the living room to continue to mop after replacing the mop. Finally, cleaning of all the rooms is completed in the above manner.

In an automatic charging system such as a cleaning robot charging system, a built-in battery pack is disposed in the cleaning robot, the battery pack is fixed inside the cleaning robot and cannot be manually removed, and mounting and removal of the battery pack can be implemented only by removing screws or the like with a tool. The cleaning robot can automatically perform a working task without manual supervision, and when electric energy is insufficient, the cleaning robot automatically returns to the base station for supplying power to and charging the energy module of the cleaning robot.

However, when another hand-held cleaner such as a hand-held vacuum cleaner or a hand-held cleaning machine is out of power, the user can only stop working and takes the hand-held cleaner home or to another charging site for charging, and the hand-held cleaner can continue to work after being fully charged. Consequently, the timeliness and continuity of the hand-held cleaner during work cannot be ensured. Therefore, it is necessary to design a new automatic charging system to resolve the foregoing problems.

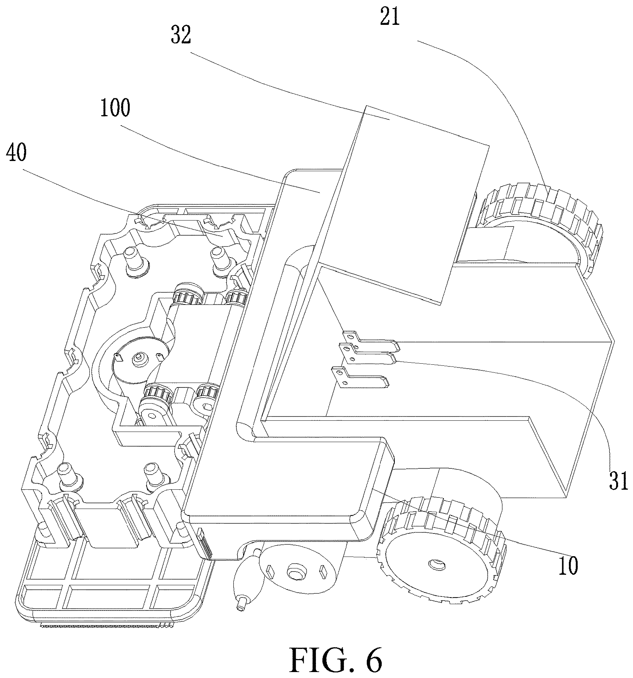

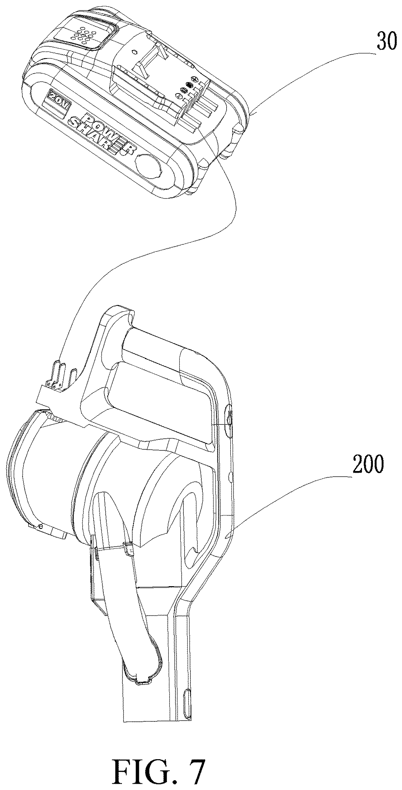

FIG. 6 and FIG. 7, show an automatic charging system, and the system includes a cleaning robot (for example, the cleaning robot 100 in this application), a hand-held cleaner 200 (for example, a hand-held vacuum cleaner or a hand-held cleaning machine), and at least one energy module 30. The energy module 30 is optionally configured to supply power to the cleaning robot 100 or the hand-held cleaner 200 or optionally configured to be charged by using the cleaning robot 100 or the hand-held cleaner 200, that is, the user may supply power to the cleaning robot 100 or the hand-held cleaner 200 by using the energy module 30, or charge the energy module 30 by using the cleaning robot 100 or the hand-held cleaner 200. Alternatively, the energy module 30 may be directly charged by using a charging base adapted to the energy module. There may be a plurality of energy modules 30. In this way, when a first energy module is mounted on the cleaning robot and mopping work is performed, a second energy module may be mounted on the hand-held cleaner and sweeping work is performed. In another embodiment, the energy module 30 may alternatively supply power to the cleaning robot alone. Both the cleaning robot and the hand-held cleaner share the same energy module 30, so that all cleaning problems can be resolved by using only one battery, thereby saving materials and energy.

The cleaning robot 100 includes a body, a battery interface capable of accommodating the energy module is disposed on the body, and the energy module 30 is detachably assembled in the battery interface. Detachable means that when the energy module 30 is removed, the energy module 30 may be directly removed without removing fasteners such as screws and nuts. The cleaning robot includes a body 10, a moving mechanism 20, a mopping module 40, a control module 60, and the like. The moving mechanism 20, the mopping module 40, the control module 60, and the like are all mounted on the body 10. The moving mechanism drives the cleaning robot 100 to move in a working region and the mopping module 40 performs mopping work. The control module is electrically connected to the moving mechanism, the mopping module 40, the energy module 30, and the like, controls the moving mechanism to drive the cleaning robot 100 to move, and controls the mopping module 40 to perform the mopping work.

External electric energy may be stored in the energy module 30 by using the cleaning robot, that is, the user may charge the energy module 30 by using the cleaning robot. In another embodiment of this application, the energy module 30 may be alternatively charged by using a common charger. That is, in this application, the energy module 30 may be charged in two manners. In one manner, the robot is controlled, by using the control module in the cleaning robot, to return to the base station to charge the energy module 30. **In** the other manner, the energy module 30 is directly charged by using an external charger. Further, the cleaning robot may further include a signal sending module. During charging of the cleaning robot, the signal sending module sends information about a charged amount in the energy module and/or information about time for which the cleaning robot can work by using the charged amount to a client. When the user sets rated powers of various hand-held cleaners in the client, the client may further display information about time for which the various hand-held cleaners can work by using the charged amount.

The energy module 30 may be a battery pack, each battery pack may include at least one battery set, and a plurality of battery sets adjust a battery voltage to a required operating voltage by using series-parallel conversion.

As shown in FIG. 6, the cleaning robot is further provided with a first plug interface 31, the hand-held cleaner is provided with a second plug interface, and the energy module 30 is provided with a third plug interface. When the first plug interface 31 is coupled to the third plug interface, the energy module 30 may supply power to the cleaning robot 100, or the energy module 30 may be charged by using the cleaning robot 100. Further, when the energy module 30 is unplugged from the cleaning robot 100 and the third plug interface is coupled to the second plug interface in the hand-held cleaner, the energy module 30 may supply power to the hand-held cleaner. The first plug interface 31 on the cleaning robot 100 may be fixed by using a sealing member such as a glue or a sealing rubber ring, thereby ensuring a waterproof function of the cleaning robot.

As shown in FIG. 2 and FIG. 6, the cleaning robot 100 further includes a cover 32 disposed on the body and covering the energy module 30, and the cover 32 mainly has functions of waterproofing, moisture-proofing, sun-proofing, and the like. In another embodiment, the cover 32 may alternatively only have one or more functions of waterproofing, moisture-proofing, sun-proofing, and the like. For example, the cover 32 may have only a function of waterproofing, to avoid circuit damage caused by that the energy module 30, the battery pack on the battery interface, the first plug interface 31, the second plug interface, and the like are wetted by rain. The cover 32 in the present invention is independent of the body.

In this application, the cover 32 is disposed on the body and covers the energy module 30. In an embodiment, the cover 32 is openably connected to the body, and snap-fit devices that are directly mutually snap-fit are disposed on the cover 32 and the body. The direct mutual snap-fit means that the snap-fit of the snap-fit devices between the cover and the body may be mutually unlocked without a fastener such as a screw. In another embodiment, the cover 32 is fixedly connected to the body, a cavity is enclosed by the cover 32 and the body, and the energy module 30 is accommodated in the cavity.

In the foregoing, the energy module 30 and the cover 32 may be disposed at different positions of the body according to actual conditions, preferably disposed below the body, to reduce the impact of an environment such as sun or rain. Alternatively, the energy module and the cover may be disposed at positions that are behind the mopping module 40 and that are centered on two driving wheels 21, to stabilize a mopping center of gravity of the cleaning robot 100. The energy module that is detachable and may be coupled to the hand-held cleaner is disposed, to achieve the technical effect that the hand-held cleaner in the automatic charging system can obtain electric energy in time.

The foregoing embodiments only show several implementations of the present invention and are described in detail, but they should not be construed as a limit to the patent scope of the present invention. It should be noted that a person of ordinary skill in the art may further be make several variations and improvements without departing from the concept of the present invention, and these variations and improvements all fall within the protection scope of the present invention. Therefore, the protection scope of the patent of the present invention shall be topic to the appended claims.

## Claims

1. A cleaning robot (100) for moving and working in a working region, the cleaning robot (100) comprising:
a body (10);
a moving mechanism (20), configured to support the body (10) and drive the cleaning robot (100) to move on a working surface;
a power module (50), configured to provide a driving force for the cleaning robot (100) to move and work;
a mopping module (40), configured to be mounted on the body (10) and perform predetermined mopping work on the working surface, wherein the mopping module (40) is configured to receive a wiping member; and
a control module (60), electrically connected to the power module (50) and configured to control the power module (50), to implement automatic moving and automatic working of the cleaning robot (100), wherein
the cleaning robot (100) further comprises a detection module (110) configured to detect a region type, when the mopping module completes mopping work of a current region, the detection module (110) detects a region type of a next region to determine whether the region type is the same as that of the current region, and when it is determined that the region types are different, the control module (60) controls the cleaning robot (100) to transfer information indicating that the wiping member is to be replaced to a user, or replace the wiping member, **characterized in that**
a classification manner of the region types is user-defined and/or preset according to actual functions of the regions.

2. The cleaning robot (100) according to claim 1, wherein the information indicating that the wiping member is to be replaced is remote information and/or local information of the cleaning robot (100).

3. The cleaning robot according to claim 1, wherein the mopping module (40) comprises a mopping plate (43), the mopping plate (43) configured to detachably mount the wiping member.

4. The cleaning robot (100) according to claim 1, wherein when it is determined that the region types are different, the control module (60) controls the cleaning robot (100) to return to a base station (500) to replace the mopping module (40).

5. The cleaning robot (100) according to claim 1, wherein the cleaning robot (100) further comprising a lifting mechanism (42), the lifting mechanism adjusts a height position of the mopping module (40) relative to the working surface under the control of the control module (60).

6. The cleaning robot (100) according to claim 5, wherein when the cleaning robot returns to a base station to replace the mopping module, the lifting mechanism drives the mopping module (40) to be lifted from a first position relative to the working surface to a second position.

7. The cleaning robot (100) according to claim 5, wherein a protrusion unit (44) is downwards disposed on the top of the body (10), and the protrusion unit (44) moves relative to the mopping module (40) and is in contact with the mopping module (40), so that the mopping module (40) is separated from the body (10).

8. The cleaning robot (100) according to claim 1, wherein the mopping module (40) is detachably mounted on the body (10).

9. The cleaning robot (100) according to claim 1, wherein the cleaning robot (100) further comprising a navigation mechanism (70), configured to form a working region map of the cleaning robot (100), the detection module (110) detects the region type of the next region based on the working region map.

10. The cleaning robot (100) according to claim 9, wherein the navigation mechanism (70) marks a current position in the working region map when the cleaning robot (100) returns to a base station (500) to replace the wiping member, so that the cleaning robot (100) returns to the marked position to work after replacing the wiping member.

11. The cleaning robot (100) according to claim 1, wherein the mopping module (40) further comprises a mop sensor; when it is determined that the region types are the same, the mop sensor detects a degree of cleanliness of the wiping member; and when the degree of cleanliness is less than a preset threshold, the control module (60) controls the cleaning robot (100) to replace the wiping member.

12. The cleaning robot (100) according to claim 11, wherein when the degree of cleanliness of the wiping member is greater than or equal to the preset threshold, the control module (60) controls the cleaning robot (100) to directly enter the next region to work.

13. The cleaning robot (100) according to any one of claims 1 to 12, wherein the cleaning robot (100) further comprises a signal sending module (80), the signal sending module (80) sends a signal of replacing the wiping member to the base station (500) when the cleaning robot (100) returns to the base station (500) to replace the wiping member, or the signal sending module (80) sends a signal of returning for charging to the base station (500) when the cleaning robot (100) returns to the base station (500) for charging.

14. A cleaning method for a cleaning robot (100), wherein the cleaning robot (100) comprises a body (10); a moving mechanism (20), configured to support the body (10) and drive the cleaning robot (100) to move; a power module (50), configured to provide a driving force for the cleaning robot (100) to move and work; a mopping module (40), configured to be mounted on the body and perform predetermined mopping work, wherein the mopping module (40) is configured to receive a wiping member; and a control module (60), electrically connected to the power module (50) and configured to control the power module (50), to implement automatic moving and automatic working of the cleaning robot (100), the method comprising:
detecting, when mopping work of a current region is completed, a region type of a next region to determine whether the region type is the same as that of the current region; and
when it is determined that the region types are different, transferring information indicating that the wiping member is to be replaced to a user or replacing the wiping member,
wherein a classification manner of the region types is user-defined and/or preset.

## Patentansprüche

1. Reinigungsroboter (100) zum Bewegen und Arbeiten in einer Arbeitsregion, wobei der Reinigungsroboter (100) Folgendes umfasst:
einen Körper (10);
einen Bewegungsmechanismus (20), der dazu ausgelegt ist, den Körper (10) zu stützen und den Reinigungsroboter (100) in eine Bewegung auf einer Arbeitsfläche anzutreiben;
ein Leistungsmodul (50), das dazu ausgelegt ist, eine Antriebskraft für den Reinigungsroboter (100) zum Bewegen und Arbeiten bereitzustellen;
ein Putzmodul (40), das dazu ausgelegt ist, an den Körper (10) montiert zu sein und festgelegte Putzarbeit auf der Arbeitsoberfläche durchzuführen, wobei das Putzmodul (40) dazu ausgelegt ist, ein Abwischelement aufzunehmen; und
ein Steuermodul (60), das elektrisch mit dem Leistungsmodul (50) verbunden und dazu ausgelegt ist, das Leistungsmodul (50) zu steuern, das automatische Bewegen und automatische Arbeiten des Reinigungsroboters (100) zu implementieren, wobei
der Reinigungsroboter (100) ferner ein Erkennungsmodul (110) umfasst, das dazu ausgelegt ist, einen Bereichstyp zu erkennen, wenn das Putzmodul Putzarbeit eines aktuellen Bereichs abschließt, wobei das Erkennungsmodul (110) einen Bereichstyp eines nächsten Bereichs erkennt, um zu bestimmen, ob der Bereichstyp der gleiche wie der des aktuellen Bereichs ist, und das Steuermodul (60), wenn bestimmt wird, dass die Bereichstypen unterschiedlich sind, den Reinigungsroboter (100) steuert, Informationen an einen Benutzer zu übertragen, die angeben, dass das Abwischelement zu wechseln ist, oder das Abwischelement zu wechseln,
**dadurch gekennzeichnet, dass**
eine Art und Weise der Klassifizierung der Bereichstypen benutzerdefiniert und/oder gemäß tatsächlichen Funktionen der Bereiche voreingestellt ist.

2. Reinigungsroboter (100) nach Anspruch 1, wobei die Informationen, die angeben, dass das Abwischelement zu wechseln ist, Ferninformationen und/oder lokale Informationen des Reinigungsroboters (100) sind.

3. Reinigungsroboter nach Anspruch 1, wobei das Wischmodul (40) eine Wischplatte (43) umfasst und die Wischplatte (43) dazu ausgelegt ist, das Abwischelement abnehmbar zu montieren.

4. Reinigungsroboter (100) nach Anspruch 1, wobei das Steuermodul (60), wenn bestimmt wird, dass die Bereichstypen unterschiedlich sind, den Reinigungsroboter (100) steuert, zu einer Basisstation (500) zurückzukehren, um das Putzmodul (40) zu wechseln.

5. Reinigungsroboter (100) nach Anspruch 1, wobei der Reinigungsroboter (100) ferner einen Hebemechanismus (42) umfasst, wobei der Hebemechanismus unter der Steuerung durch das Steuermodul (60) eine Höhenposition des Putzmoduls (40) relativ zu der Arbeitsoberfläche justiert.

6. Reinigungsroboter (100) nach Anspruch 5, wobei der Hebemechanismus das Anheben des Putzmoduls (40) von einer ersten Position relativ zu der Arbeitsoberfläche auf eine zweite Position antreibt, wenn der Reinigungsroboter zu einer Basisstation zurückkehrt, um das Putzmodul zu wechseln.

7. Reinigungsroboter (100) nach Anspruch 5, wobei an der Oberseite des Körpers (10) abwärts gerichtet eine Überstandseinheit (44) angeordnet ist und sich die Überstandseinheit (44) relativ zu dem Putzmodul (40) bewegt und in Kontakt mit dem Putzmodul (40) steht, so dass das Putzmodul (40) von dem Körper (10) getrennt ist.

8. Reinigungsroboter (100) nach Anspruch 1, wobei das Putzmodul (40) abnehmbar an den Körper (10) montiert ist.

9. Reinigungsroboter (100) nach Anspruch 1, wobei der Reinigungsroboter (100) ferner einen Navigationsmechanismus (70) umfasst, der dazu ausgelegt ist, eine Karte der Arbeitsbereiche des Reinigungsroboters (100) zu bilden, wobei das Erkennungsmodul (110) den Bereichstyp des nächsten Bereichs basierend auf der Karte der Arbeitsbereiche erkennt.

10. Reinigungsroboter (100) nach Anspruch 9, wobei der Navigationsmechanismus (70) eine aktuelle Position in der Karte der Arbeitsbereiche markiert, wenn der Reinigungsroboter (100) zur Basisstation (500) zurückkehrt, um das Abwischelement zu wechseln, so dass der Reinigungsroboter (100) zu der markierten Position zurückkehrt, um nach dem Wechseln des Abwischelements zu arbeiten.

11. Reinigungsroboter (100) nach Anspruch 1, wobei das Putzmodul (40) ferner einen Putzsensor umfasst; wobei der Putzsensor, wenn bestimmt wird, dass die Bereichstypen gleich sind, einen Grad der Sauberkeit des Abwischelements erkennt; und das Steuermodul (60), wenn der Grand der Sauberkeit kleiner als ein voreingestellter Schwellenwert ist, den Reinigungsroboter (100) steuert, das Abwischelement zu wechseln.

12. Reinigungsroboter (100) nach Anspruch 11, wobei das Steuermodul (60), wenn der Grad der Sauberkeit des Abwischelements größer oder gleich dem voreingestellten Schwellenwert ist, den Reinigungsroboter (100) steuert, direkt in den nächsten Bereich zum Arbeiten einzutreten.

13. Reinigungsroboter (100) nach einem der Ansprüche 1 bis 12, wobei der Reinigungsroboter (100) ferner ein Signalsendemodul (80) umfasst, wobei das Signalsendemodul (80) ein Signal zum Wechseln des Abwischelements an die Basisstation (500) sendet, wenn der Reinigungsroboter (100) zur Basisstation (500) zurückkehrt, um das Abwischelement zu wechseln, oder das Signalsendemodul (80) ein Signal des Rückkehrens zwecks Ladens an die Basisstation (500) sendet, wenn der Reinigungsroboter (100) zum Laden zur Basisstation (500) zurückkehrt.

14. Reinigungsverfahren für einen Reinigungsroboter (100), wobei der Reinigungsroboter (100) einen Körper (10); einen Bewegungsmechanismus (20), der dazu ausgelegt ist, den Körper (10) zu stützen und den Reinigungsroboter (100) in eine Bewegung anzutreiben; ein Leistungsmodul (50), das dazu ausgelegt ist, eine Antriebskraft für den Reinigungsroboter (100) zum Bewegen und Arbeiten bereitzustellen; ein Putzmodul (40), das dazu ausgelegt ist, an den Körper montiert zu sein und festgelegte Putzarbeit durchzuführen, wobei das Putzmodul (40) dazu ausgelegt ist, ein Abwischelement aufzunehmen; und ein Steuermodul (60) umfasst, das elektrisch mit dem Leistungsmodul (50) verbunden und dazu ausgelegt ist, das Leistungsmodul (50) zu steuern, das automatische Bewegen und automatische Arbeiten des Reinigungsroboters (100) zu implementieren, wobei das Verfahren umfasst:
Erkennen, wenn die Putzarbeit in einem aktuellen Bereich abgeschlossen ist, eines Bereichstyps eines nächsten Bereichs, um zu bestimmen, ob der Bereichstyp der gleiche wie der des aktuellen Bereichs ist; und
Übertragen von Informationen an einen Benutzer, die angeben, dass das Abwischelement zu wechseln ist, oder Wechseln des Abwischelements, wenn bestimmt wird, dass die Bereichstypen unterschiedlich sind,
wobei eine Art und Weise der Klassifizierung der Bereichstypen benutzerdefiniert und/oder voreingestellt ist.

## Revendications

1. Robot de nettoyage (100) pour déplacer et travailler dans une région de travail, le robot de nettoyage (100) comprenant :
un corps (10) ;
un mécanisme de déplacement (20), configuré pour supporter le corps (10) et entraîner le robot de nettoyage (100) pour qu'il se déplace sur une surface de travail ;
un module de puissance (50), configuré pour fournir une force d'entraînement pour que le robot de nettoyage (100) se déplace et travaille ;
un module de lavage (40), configuré pour être monté sur le corps (10) et réaliser un travail de lavage prédéterminé sur la surface de travail, le module de lavage (40) étant configuré pour recevoir un élément d'essuyage ; et
un module de commande (60), électriquement connecté au module de puissance (50) et configuré pour commander le module de puissance (50), afin de mettre en œuvre un déplacement automatique et un travail automatique du robot de nettoyage (100), dans lequel
le robot de nettoyage (100) comprend en outre un module de détection (110) configuré pour détecter un type de région, lorsque le module de lavage achève le travail de lavage d'une région actuelle, le module de détection (110) détecte un type de région d'une région suivante pour déterminer si le type de région est le même que celui de la région actuelle, et lorsqu'il est déterminé que les types de région sont différents, le module de commande (60) commande le robot de nettoyage (100) pour qu'il transfère à un utilisateur des informations indiquant que l'élément d'essuyage doit être remplacé, ou remplace l'élément d'essuyage,
**caractérisé en ce que**
une manière de classification des types de région est préréglée et/ou définie par l'utilisateur selon les fonctions réelles des régions.

2. Robot de nettoyage (100) selon la revendication 1, dans lequel les informations indiquant que l'élément d'essuyage doit être remplacé sont des informations à distance et/ou des informations locales du robot de nettoyage (100).

3. Robot de nettoyage selon la revendication 1, dans lequel le module de lavage (40) comprend une plaque de lavage (43), la plaque de lavage (43) configurée pour monter l'élément d'essuyage de façon détachable.

4. Robot de nettoyage (100) selon la revendication 1, dans lequel, lorsqu'il est déterminé que les types de région sont différents, le module de commande (60) commande le robot de nettoyage (100) pour qu'il retourne à une station de base (500) afin de remplacer le module de lavage (40).

5. Robot de nettoyage (100) selon la revendication 1, dans lequel le robot de nettoyage (100) comprend en outre un mécanisme de levage (42), le mécanisme de levage ajuste une position de hauteur du module de lavage (40) relativement à la surface de travail sous la commande du module de commande (60).

6. Robot de nettoyage (100) selon la revendication 5, dans lequel lorsque le robot de nettoyage retourne à une station de base pour remplacer le module de lavage, le mécanisme de levage entraîne le module de lavage (40) à être levé d'une première position relativement à la surface de travail à une deuxième position.

7. Robot de nettoyage (100) selon la revendication 5, dans lequel une unité de saillie (44) est disposée vers le bas sur le dessus du corps (10), et l'unité de saillie (44) se déplace relativement au module de lavage (40) et est en contact avec le module de lavage (40), de sorte que le module de lavage (40) soit séparé du corps (10).

8. Robot de nettoyage (100) selon la revendication 1, dans lequel le module de lavage (40) est monté de façon détachable sur le corps (10).

9. Robot de nettoyage (100) selon la revendication 1, dans lequel le robot de nettoyage (100) comprend en outre un mécanisme de navigation (70), configuré pour former une carte de région de travail du robot de nettoyage (100), le module de détection (110) détecte le type de région de la région suivante sur la base de la carte de région de travail.

10. Robot de nettoyage (100) selon la revendication 9, dans lequel le mécanisme de navigation (70) marque une position actuelle sur la carte de région de travail lorsque le robot de nettoyage (100) retourne à une station de base (500) pour remplacer l'élément d'essuyage, de sorte que le robot de nettoyage (100) retourne à la position marquée pour travailler après le remplacement de l'élément d'essuyage.

11. Robot de nettoyage (100) selon la revendication 1, dans lequel le module de lavage (40) comprend en outre un capteur de dispositif de lavage ; lorsqu'il est déterminé que les types de région sont identiques, le capteur de dispositif de lavage détecte un degré de propreté de l'élément d'essuyage ; et lorsque le degré de propreté est inférieur à un seuil préréglé, le module de commande (60) commande le robot de nettoyage (100) pour qu'il remplace l'élément d'essuyage.

12. Robot de nettoyage (100) selon la revendication 11, dans lequel lorsque le degré de propreté de l'élément d'essuyage est supérieur ou égal au seuil préréglé, le module de commande (60) commande le robot de nettoyage (100) pour qu'il entre directement dans la région suivante pour travailler.

13. Robot de nettoyage (100) selon l'une quelconque des revendications 1 à 12, dans lequel le robot de nettoyage (100) comprend en outre un module d'envoi de signal (80), le module d'envoi de signal (80) envoie un signal de remplacement de l'élément d'essuyage à la station de base (500) lorsque le robot de nettoyage (100) retourne à la station de base (500) pour remplacer l'élément d'essuyage, ou le module d'envoi de signal (80) envoie un signal de retour pour charge à la station de base (500) lorsque le robot de nettoyage (100) retourne à la station de base (500) pour charge.

14. Procédé de nettoyage pour un robot de nettoyage (100), le robot de nettoyage (100) comprenant un corps (10) ; un mécanisme de déplacement (20), configuré pour supporter le corps (10) et entraîner le robot de nettoyage (100) à se déplacer ; un module de puissance (50), configuré pour fournir une force d'entraînement pour que le robot de nettoyage (100) se déplace et travaille ; un module de lavage (40), configuré pour être monté sur le corps et réaliser un travail de lavage prédéterminé, le module de lavage (40) étant configuré pour recevoir un élément d'essuyage ; et un module de commande (60), électriquement connecté au module de puissance (50) et configuré pour commander le module de puissance (50), pour qu'il mette en œuvre un déplacement automatique et un travail automatique du robot de nettoyage (100), le procédé comprenant :
la détection, lorsqu'un travail de nettoyage d'une région actuelle est achevé, d'un type de région d'une région suivante pour déterminer si le type de région est le même que celui de la région actuelle ; et
lorsqu'il est déterminé que les types de région sont différents, le transfert à un utilisateur d'informations indiquant que l'élément d'essuyage doit être remplacé ou le remplacement de l'élément d'essuyage,
dans lequel une manière de classification des types de région est préréglée et/ou définie par l'utilisateur.
